# EUROPEAN PATENT SPECIFICATION

(11) **EP 2 297 805 B1**
(45) Date of publication and mention of the grant of the patent: **14.08.2013**
(21) Application number: 09738441.6
(22) Date of filing: 05.05.2009
(51) Int. Cl.: H01M 4/62

(54) **RECHARGEABLE BATTERY WITH NEGATIVE LITHIUM ELECTRODE**
WIEDERAUFLADBARE BATTERIE MIT NEGATIV-LITHIUM-ELEKTRODE
BATTERIE RECHARGEABLE MUNIE D'UNE ÉLECTRODE NÉGATIVE AU LITHIUM

(30) Priority: 02.05.2008 GB 0808059
(43) Date of publication of application: 23.03.2011
(73) Proprietor: Oxis Energy Limited, D5 Culham Science Centre Abingdon Oxfordshire OX14 4RX (GB)
(72) Inventor: KOLOSNITSYN, Vladimir, Ufa 450052 (RU); KARASEVA, Elena, Ufa 450054 (RU)
(74) Representative: Harrison Goddard Foote LLP
(86) International application number: PCT/GB2009/050461
(87) International publication number: WO 2009/133411

(56) References cited:
- WO-A-2008/017888
- US-A1- 2005 102 824
- US-A1- 2006 194 115

## Description

### TECHNICAL FIELD

The present invention relates to electrochemical power engineering, in particular it relates to chemical sources of electric energy with negative electrodes made of metal lithium, lithium alloys or materials or compounds that can intercalate lithium ions.

### BACKGROUND OF THE INVENTION

Metallic lithium is the most attractive material for negative electrodes for chemical power sources because of its high specific capacity (3.88 Ah/g). However, metallic lithium electrodes are mostly used in primary (non-rechargeable) batteries.

The main disadvantage of metal lithium electrodes is the tendency of lithium to form dendrites during cathodic deposition on the anode. Lithium dendrite formation during battery charging causes a risk of internal short circuits that can cause fire or explosion. As a result, secondary and rechargeable power sources with metal lithium electrodes are not commercially produced. Only some companies, such as SANYO and VARTA, manufacture rechargeable button cells with negative electrodes made of lithium alloys (lithium-aluminium, lithium-indium, etc.).

To prevent dendrite formation during cathode deposition of lithium (during charging) several methods have been proposed: utilization of special electrolyte systems, producing hard films of polymer electrolytes on the lithium electrode surface; special electrode additives possessing certain properties, for example monomer additives that polymerize on the lithium electrode surface to highly conductive polymer electrolyte films.

It is known from US 6,248,481 and US 5,882,812 to provide a rechargeable lithium-sulphur cell (a cell where the negative electrode is a metal, and alloy or an intercalation material, the positive electrode is a metal oxide, metal sulphide or an organosulphur electrode, and the electrolyte is at least one organic solvent in which polysulphides are soluble) including a "tuning species" in the form of at least one of elemental sulphur, a sulphide species and a polysulphide species. The purpose of the tuning species is to provide overcharge protection, i.e. to prevent damage to the cell in the event that charging is carried out beyond a predetermined limit. The basis of the overcharge protection mechanism lies in the realisation that on overcharge, polysulphide species of intermediate oxidation state located in the positive electrode are converted to more highly oxidised polysulphide species. These more highly oxidised species are transported to the negative electrode where they are reduced back to the intermediate polysulphide species. The intermediate polysulphide species thus produced are then transported back to the positive electrode where they are again oxidised to the highly oxidised state. By providing this steady flux of intermediate polysulphide species at the positive electrode, the cell potential can be maintained at a relatively low level dictated by the oxidation reaction of the intermediate species, thereby helping to protect against overcharge. This redox shuttle mechanism can be tuned by the addition of various tuning agents so as to adjust the potential at which the reaction occurs. The tuning species is discloses as being present in the form of an electrolyte additive, or in the form of an alloying element added to a primary metal component of the negative electrode. There is no suggestion of incorporating any additive to the positive electrode, nor is there any consideration of the problems of lithium dendrite formation during charging. Indeed, US 6,248,481 and US 5,882,812 are entirely concerned with the problem of overcharging, whereas dendrite formation, which is a problem addressed by embodiments of the present invention, occurs during normal charging (i.e. when the cell is being initially charged to its operating potential, rather than being overcharged to a potential higher than its operating potential). In particular, US 6,248,481 and US 5,882,812 disclose electrochemical systems designed to reduce the potential by changing one electrochemical reaction into another upon overcharge, but in which it is still possible for dendritic lithium to form on the positive electrode during normal charging.

US 2006/0194115 discloses a cell having a negative electrode comprising a lithium intercalation material, a positive electrode comprising active sulphur, and a liquid non-aqueous electrolyte. The surface of the negative electrode is modified and protected with a surface coating that passivates redox reactions of polysulphides on the negative electrode and allows for lithium intercalation/de-intercalation into/from the negative electrode. It is important to appreciate that the positive electrode here is a sulphur electrode (i.e. made of elemental sulphur, lithium sulphide or lithium polysulphides) rather than an electrode based on oxides or complex oxides of transition metals, sulphides of transition metals or mixtures of transition metal sulphides. Moreover, the negative electrode is a carbon or graphite electrode, rather than an electrode made of metallic lithium or a lithium alloy. As such, US 2006/0194115 relates to a different electrochemical system to that used in embodiments of the present invention, and specifically to an electrochemical system in which lithium dendrite formation is not a problem because the negative electrode is not made of metallic lithium or a lithium alloy.

### BRIEF SUMMARY OF THE DISCLOSURE

According to the present invention, there is provided a rechargeable cell or battery comprising a negative electrode, a separator, a positive electrode and non-aqueous electrolyte, wherein the negative electrode comprises at least one or more of metallic lithium, a lithium alloy or a material (compound) capable of intercalating lithium ions; and wherein the positive electrode includes a redox shuttle additive to facilitate dissolution of dendritic lithium in the electrolyte.

Advantageously, the electrolyte may also include a redox shuttle additive, which may be the same as or different to the redox shuttle additive in the electrode.

One of the more efficient ways of dissolving dendrites that may be formed during cathode precipitation of metal lithium is to use redox shuttle additives in electrolytes, but this does not generally completely solve the problem of dendrite formation.

By incorporating a redox shuttle additive in the electrode itself, dendrite formation is particularly well suppressed.

Redox shuttle additives are compounds able to reversibly oxidize and reduce. Oxidation of redox shuttle additives has to occur at the positive electrode during charging of the cell or battery, while reduction has to occur at the negative electrode during the reaction with dendrite finely-dispersed lithium.

The redox shuttle additive preferably is or comprises at least one of elemental sulphur or inorganic, organic or polymer compounds of or containing sulphur.

Advantageously, the redox shuttle additive comprises at least one lithium polysulphide.

The redox shuttle additive acts to facilitate dissolution of dendritic lithium, and hence to reduce or prevent cathodic deposition of dendritic lithium on the anode during normal charging of the cell or battery, rather than to protect against overcharging.

Moreover, the redox shuttle additive may help to facilitate dissolution of dendritic lithium during charging, discharging and/or rest periods. In other words, embodiments of the invention can provide the surprising technical benefit of reducing or eliminating lithium dendrite formation at all times, not just during in particular parts of the charge/discharge cycle, and even when the cell is not being used (for example after it has been manufactured but before it has been sold and/or put to use).

During discharge of batteries or cells in which the positive electrode contains sulphur or electrochemically active organic, inorganic or polymer compounds of sulphur, there are formed lithium polysulphides that dissolve in the electrolyte.

**nS + 2Li⁺ + 2e⁻ → Li₂S**ₙ₍ₛₒₗᵤₜᵢₒₙ₎ **(1)**

Lithium polysulphides are quite strong oxidants and react actively with metallic lithium. The result of reaction of long chain lithium polysulphide(s) with metallic lithium is the formation of a lithium sulphide film on the surface of the lithium electrode and on the surface of any dendritic lithium that is present.

**2Li + Li₂Sₙ** (solution) → **Li₂Sₙ₋₁** (solution) **+ Li₂S**↓_{(solid)} **(2)**

The presence of this film on the surface of the dendritic lithium particles prevents further growth of dendritic lithium. At the same time, the film of lithium sulphide does not prevent any further electrochemical reaction on the lithium electrode.

Lithium sulphide is capable of interacting with sulphur and long chain lithium polysulphides to form well-soluble polysulphides.

**Li₂S**(Solid) ⁺ **S**ₙ₍ₛₒₗᵤₜᵢₒₙ₎ → **Li**₂**S**ₙ₊₁₍ₛₒₗᵤₜᵢₒₙ₎ (3)

**Li₂S**(Solid) ⁺ **Li**₂**S**ₙ₍ₛₒₗᵤₜᵢₒₙ₎ → **Li**₂**S**ₙ₋ₘ₍ₛₒₗᵤₜᵢₒₙ₎ **⁺ Li**₂**S**ₘ₊₁₍ₛₒₗᵤₜᵢₒₙ₎ **(4)**

This interaction results in the dissolution of the sulphide film from the surface of the metallic lithium. The balance of processes of formation and dissolution (scavenging) determines the thickness and properties of the surface coating on the metallic lithium electrode in electrolyte systems containing lithium polysulphides.

Since there is no cathodic deposition of metallic lithium on the surfaces of dendritic lithium in sulphide systems, reactions (3) and (4) lead to complete or at least substantially increased dissolution of lithium dendrites.

It is important to note that this process of dendrite protection works not only during battery charge (cell polarisation) but also during discharge and rest periods (in the absence of polarisation).

The positive electrode may comprise at least an electrode active material, a conductive additive and a binder.

The electrode active material may comprise oxides or complex oxides of transition metals (preferably including several metals of variable valency in the composition), sulphides of transition metals or mixtures of transition metal sulphides.

In one currently preferred embodiment, the electrode active material is or mainly comprises FeS₂.

The binder may be a polymer chosen from the group comprising: polyvinyl acetate, polyvinyl alcohol, polyvinyl pyrrolidone, polyethylene oxide, alkylated polyethylene oxide, crosslinked polyethylene oxide, polyvinyl ether, polyether grafted polysiloxanes, polymethyl methacrylate, polyvinylidene fluoride, copolymer of polyhexafluoropropylene and polyvinylidene fluoride, polyethyl acrylate, polytetrafluoroethylene, polyvinyl chloride, polyacrylonitrile (PAN), polyvinyl pyridine, polystyrene, and derivatives, mixtures or copolymers thereof.

A porous, microporous or fibrous dielectric inorganic or organic materials or combinations thereof may be used as the separator.

The electrolyte may comprise a solution of one or several lithium salts in an aprotic dipolar solvent or a mixture of aprotic dipolar solvents.

Preferably, the electrolyte solution comprises at least one solvent or several solvents selected from the group comprising: tetrahydrofurane, 2-methyltetrahydrofurane, dimethylcarbonate, diethylcarbonate, ethylmethylcarbonate, methylpropylcarbonate, methylpropylpropyonate, ethylpropylpropyonate, methylacetate, ethylacetate, propylacetate, dimetoxyethane, 1,3-dioxalane, diglyme (2-methoxyethyl ether), tetraglyme, ethylene carbonate, propylene carbonate, γ-butyrolactone, sulfolane and sulfones.

Preferably, the electrolyte solution comprises at least one salt or several salts selected from the group comprising: lithium hexafluorophosphate (LiPF₆), lithium hexafluoroarsenate (LiAsF₆), lithium perchlorate (LiClO₄), lithium sulfonylimide trifluoromethane (LiN(CF₃SO₂)₂)) and lithium trifluorosulfonate (CF₃SO₃Li) or other lithium salts or salts of another alkali metal or a mixture thereof such as salts of quaternary ammonium bases, sodium potassium salts, halogenides, lithium bromides, iodides and others.

Advantageously, a concentration of the lithium salt is in a range from 0.1M to a concentration of at least 90% of saturation concentration of the salt in the solvent or solvent mixture used at atmospheric pressure and in a temperature range of -40 to +140°C.

The redox shuttle additive is included in the positive electrode, and may be provided in oxidised form in the positive electrode, for example in the form of sulphur.

It is to be appreciated that the redox shuttle additive, which is incorporated in the positive electrode, provides a source of ionic species which, during charging of the cell or battery, migrate to the negative electrode and react there with dendritic lithium species so as to cause these to dissolve in the electrolyte.

In some embodiments, the redox shuttle additive is additionally included in the electrolyte, and a concentration of the redox shuttle additive in the electrolyte may be 0.1-0.5M calculated on the basis of atoms of sulphur.

Where the redox shuttle additive is provided in the positive electrode, it preferably has an electrochemical capacity from 5 to 25% of the electrochemical capacity of the positive electrode active material as a whole.

In particularly preferred embodiments of the present invention, the positive electrode is based on a metal oxide or metal sulphide, preferably a transition metal oxide or transition metal sulphide, additionally incorporating a redox shuttle additive in the form of at least one of elemental sulphur or inorganic, organic or polymer compounds of or containing sulphur.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### BRIEF DESCRIPTION OF THE DRAWINGS

For a better understanding of the present invention and to show how it may be carried into effect, reference shall now be made by way of example to the following drawings, in which:
FIGURE 1 (a) is a graph showing charge-discharge plots during cycling of a prior art Li-MnO₂ cell operating at 30°C and atmospheric pressure;
FIGURE 1 (b) is a graph showing change of charge-discharge capacity plots during cycling of the prior art Li-MnO₂ cell operating at 30°C and atmospheric pressure;
FIGURE 2(a) is a graph showing charge-discharge plots during cycling of a Li-(MnO₂+S) cell of an embodiment of the present invention operating at 30°C and atmospheric pressure;
FIGURE 2(b) is a graph showing change of charge-discharge capacity plots during cycling of the Li-(MnO₂+S) cell of the embodiment of the present invention operating at 30°C and atmospheric pressure.
FIGURE 3(a) is a graph showing charge-discharge plots during cycling of an Li-MnO₂ cell with a polysulphide electrolyte additive operating at 80°C and atmospheric pressure; and
FIGURE 3(b) is a graph showing change of charge-discharge capacity plots during cycling of the Li-MnO₂ cell with polysulphide electrolyte additive operating at 80°C and atmospheric pressure.

### DETAILED DESCRIPTION

### EXAMPLE 1 (comparative)

A positive electrode made up of 70% MnO₂ (available from Sigma-Aldrich, UK), 10% electro-conductive carbon black (Ketjenblack EC-600JD, available from Akzo Nobel Polymer Chemicals BV, Netherlands) and 20% polyethylene oxide (PEO, 4,000,000 molecular weight, available from Sigma-Aldrich, UK) was prepared according to the following procedure.

A mixture of dry components was milled in a high speed grinder (Microtron MB550) for 15 to 20 minutes. Acetonitryl was added to the mixture as a solvent for the binder. The resulting suspension was then mixed for 15 to 20 hours in a DLH laboratory stirrer. The solids content of the suspension was 5%. The suspension thus produced was deposited by an automatic film applicator (Elcometer SPRL) to one side of an 18µm thick aluminium foil with an electro conductive carbon coating (Product No. 60303 available from Rexam Graphics, South Hadley, Mass.) as a current collector.

The carbon coating was dried in ambient conditions for 20 hours. After drying, the electrode was pressed at a pressure of 500-1000kg/cm². The resulting dry cathode layer had a thickness after drying of 28µm and after' pressing of 21µm, and contained 3.07mg/cm² of MnO₂.

The positive electrode was used in a small cell producing electric current with an electrode surface area of about 5cm². The positive electrode was dried in a vacuum at 50°C for 5 hours before being installed in the cell. Celgard 3501 (a trade mark of Tonen Chemical Corporation, Tokyo, Japan, and also available from Mobil Chemical Company, Films Division, Pittsford, N.Y.) was used as a porous separator.

An electrolyte comprising a solution of trifluoromethanesulphonate of lithium (available from 3M Corporation, St. Paul, Minn.) in sulfolane (99.8%, standard for GC available from Sigma-Aldrich, UK), was deposited onto the separator in a quantity of 1 µl/cm². A lithium foil was used as a negative electrode.

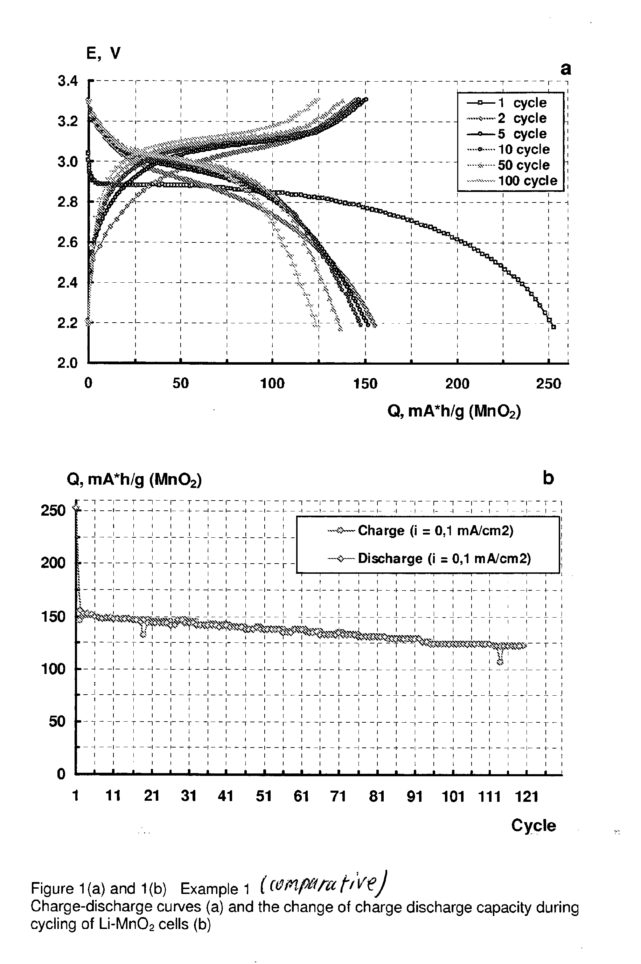

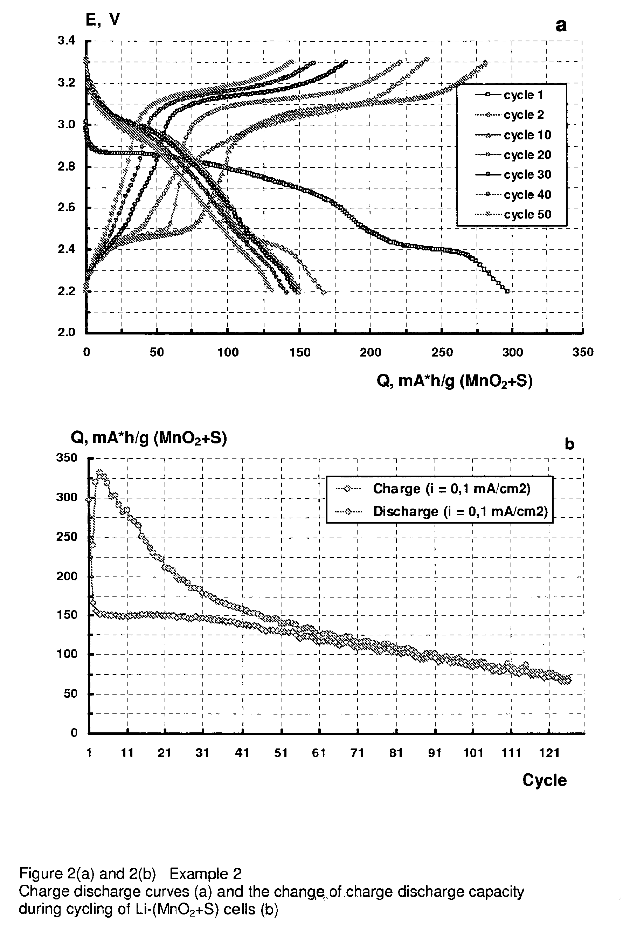

The cell was kept at ambient room conditions for 24 hours. Thereafter, the cell was cycled. Charge and discharge was conducted at a current density of 0.1 mA/cm² with discharge termination at 2.2V and charge termination at 3.3V. The charge-discharge plots are shown in Figures 1 and 2.

After the end of cycling the cell was disassembled and the surface of the lithium electrode was studied thoroughly. It was found that the lithium electrode surface was coated with a thin layer of powder-like gray compound. This fact indicates the formation of lithium dendrites during cycling.

### EXAMPLE 2

A positive electrode made up of 60% MnO₂ (available from Sigma-Aldrich, UK), 10% electro-conductive carbon black (Ketjenblack EC-600JD, available from Akzo Nobel Polymer Chemicals BV, Netherlands), 20% polyethylene oxide (PEO, 4,000,000 molecular weight, available from Sigma-Aldrich, UK) as a binder and 10% sublimated, 99.5% sulphur (Fisher Scientific, UK) was prepared according to the following procedure.

A mixture of dry components was milled in a high speed grinder (Microtron MB550) for 15 to 20 minutes. Acetonitryl was then added to the mixture as a solvent for the binder. The resulting suspension was then mixed for 15 to 20 hours in a DLH laboratory stirrer. The solids content of the suspension was 5%. The suspension thus produced was deposited by an automatic film applicator (Elcometer SPRL) to one side of an 18µm thick aluminium foil with an electroconductive carbon coating (Product No. 60303 available from Rexam Graphics, South Hadley, Mass.) as a current collector.

The carbon coating was dried in ambient conditions for 20 hours. After drying, the electrode was pressed at a pressure of 500-1000kg/cm². The resulting dry cathode layer had a thickness of 23µm after pressing and contained 2.96mg/cm² of MnO₂ and 0.59mg/cm² of S.

The positive electrode was prepared in a similar manner to that described in Example 1 with an electrode surface area of about 5cm². The electrode was dried in a vacuum at 50°C for 5 hours before being installed in the cell. Celgard 3501 (a trade mark of Tonen Chemical Corporation, Tokyo, Japan, and also available from Mobil Chemical Company, Films Division, Pittsford, N.Y.) was used as a porous separator.

An electrolyte comprising a solution of trifluoromethanesulphonate of lithium (available from 3M Corporation, St. Paul, Minn.) in sulfolane (99.8%, standard for GC available from Sigma-Aldrich, UK), was deposited onto the separator in a quantity of 1µl/cm².

A lithium foil was used as a negative electrode.

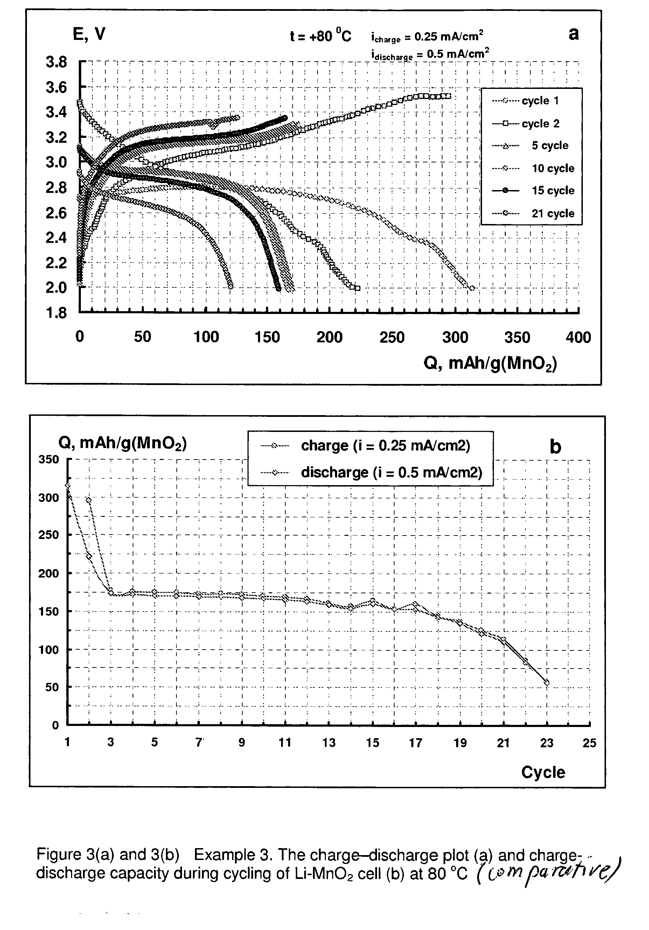

The cell was kept at ambient room conditions for 24 hours. Thereafter, the cell was cycled. Charge and discharge was conducted at a current density of 0.1mA/cm² with discharge termination at 2.2V and charge termination at 3.3V. The charge-discharge plots are shown in Figures 3 and 4.

After the end of cycling the cell was disassembled and the surface of the lithium electrode was studied thoroughly. It was found that the lithium electrode surface was matte and slightly yellowish. Powder-like deposits were not found on the lithium electrode surface. This fact indicates the absence of lithium dendrites.

### EXAMPLE 3 (comparative)

A positive electrode made up of 80% MnO₂ (available from Sigma-Aldrich, UK), 9% electro-conductive carbon black (Ketjenblack EC-600JD, available from Akzo Nobel Polymer Chemicals BV, Netherlands), 1% graphite (Printex XE2, Degussa GB FP) and 10% PTFE (Teflon®) was prepared according to the following procedure.

A mixture of dry components (MnO₂, carbon black and graphite) was milled in a high speed grinder (Microtron MB550) for 15 to 20 minutes. A suspension of PTFE in water mixed with isobutyl alcohol was added to the mixture of dry components keeping it thoroughly mixed. The mass obtained was calendared into several homogenous sheets having a thickness of 200µm, from which a positive electrode of surface area 5cm² was produced.

The positive electrode was dried in ambient conditions for 20 hours.

The positive electrode was used in a small cell producing electric current with an electrode surface area of about 5cm². The electrode was dried in a vacuum at 50°C for 5 hours before being installed in the cell. Celgard 3501 (a trade mark of Tonen Chemical Corporation, Tokyo, Japan, and also available from Mobil Chemical Company, Films Division, Pittsford, N.Y.) was used as a porous separator.

An electrolyte comprising a solution of 0.1M Li₂S₈ in LiClO₄ in sulfolane (99.8%, standard for GC available from Sigma-Aldrich, UK) was deposited onto the positive electrode end separator.

A lithium foil was used as a negative electrode.

The cell was kept at ambient room conditions for 24 hours. Thereafter, the cell was cycled. Charge and discharge was conducted at 80°C. The charge current density was 0.25mA/cm²; the discharge current density was 0.5mA/cm² with charge cut-off at 3.3-3.5V and discharge termination at 2.0V. The charge-discharge plots are shown in Figure 3.

This example shows that sulphur can be introduced into the electrochemical system in the form of a solution of lithium polysulphide (Li₂S₈) in electrolyte. Even in this form, sulphur has a positive effect on the cycling of LiMnO₂ cells even at elevated temperatures (80°C).

## Claims

1. A rechargeable cell or battery comprising a negative electrode, a separator, a positive electrode and non-aqueous electrolyte, wherein the negative electrode comprises at least one or more of metallic lithium, a lithium alloy or a material (compound) capable of intercalating lithium ions; and wherein the positive electrode comprises at least an electrode active material, a conductive additive and a binder; **characterized in that** the electrode active material comprises oxides or complex oxides of transition metals (preferably including several metals of variable valency in the composition), sulphides of transition metals or mixtures of transition metal sulphides, and wherein the positive electrode includes a redox shuttle additive to facilitate dissolution of dendritic lithium in the electrolyte, the redox shuttle additive being or comprising at least one of elemental sulphur or inorganic, organic or polymer compounds of or containing sulphur, which during discharge of the cell, form lithium polysulphides that dissolve in the electrolyte.

2. A cell or battery as claimed in claim 1, wherein the electrolyte additionally includes a redox shuttle additive, which may be the same as or different to the redox shuttle additive in the electrode.

3. A cell or battery as claimed in any preceding claim, wherein the redox shuttle additive is elemental sulphur.

4. A cell or battery as claimed in any preceding claim, wherein the electrode active material is or mainly comprises FeS₂.

5. A cell or battery as claimed in any preceding claim, wherein the binder is a polymer chosen from the group comprising: polyvinyl acetate, polyvinyl alcohol, polyvinyl pyrrolidone, polyethylene oxide, alkylated polyethylene oxide, crosslinked polyethylene oxide, polyvinyl ether, polyether grafted polysiloxanes, polymethyl methacrylate, polyvinylidene fluoride, copolymer of polyhexafluoropropylene and polyvinylidene fluoride, polyethyl acrylate, polytetrafluoroethylene, polyvinyl chloride, polyacrylonitrile (PAN), polyvinyl pyridine, polystyrene, and derivatives, mixtures or copolymers thereof.

6. A cell or battery as claimed in any preceding claim, wherein porous, microporous or fibrous dielectric inorganic or organic materials or combinations thereof are used as the separator.

7. A cell or battery as claimed in any preceding claim, wherein the electrolyte comprises a solution of one or several lithium salts in an aprotic dipolar solvent or a mixture of aprotic dipolar solvents.

8. A cell or battery as claimed in claim 7, wherein the electrolyte solution comprises at least one solvent or several solvents selected from the group comprising: tetrahydrofurane, 2-methyltetrahydrofurane, dimethylcarbonate, diethylcarbonate, ethylmethylcarbonate, methylpropylcarbonate, methylpropylpropyonate, ethylpropylpropyonate, methylacetate, ethylacetate, propylacetate, dimetoxyethane, 1,3-dioxalane, diglyme (2-methoxyethyl ether), tetraglyme, ethylene carbonate, propylene carbonate, γ-butyrolactone, sulfolane and sulfones.

9. A cell or battery as claimed in claim 7 or 8, wherein the electrolyte solution comprises at least one salt or several salts selected from the group comprising: lithium hexafluorophosphate (LiPF₆), lithium hexafluoroarsenate (LiAsF₆), lithium perchlorate (LiClO₄), lithium sulfonylimide trifluoromethane (LiN(CF₃SO₂)₂)) and lithium trifluorosulfonate (CF₃SO₃Li) or other lithium salts or salts of another alkali metal or a mixture thereof such as salts of quaternary ammonium bases, sodium potassium salts, halogenides, lithium bromides, iodides and others.

10. A cell or battery as claimed in any one of claims 7 to 9, wherein a concentration of the lithium salt is in a range from 0.1M to a concentration of at least 90% of saturation concentration of the salt in the solvent or solvent mixture used.

11. A cell or battery as claimed in claim 2 or any one of claims 3 to 10 depending from claim 2, wherein a concentration of the redox shuttle additive in the electrolyte is 0.1-0.5M calculated on the basis of atoms of sulphur.

12. A cell or battery as claimed in any preceding claim, wherein the redox shuttle additive is provided in oxidised form in the positive electrode.

13. A cell or battery as claimed in any preceding claim, wherein the electrochemical capacity of the shuttle additive contained in the electrode is from 5 to 25% of the electrochemical capacity of the positive electrode active material as a whole.

## Patentansprüche

1. Wiederaufladbare Zelle oder Batterie, die eine negative Elektrode, einen Separator, eine positive Elektrode und einen nicht-wässrigen Elektrolyt umfasst, wobei die negative Elektrode mindestens eine oder mehrere der folgenden Substanzen umfasst: metallisches Lithium, eine Lithiumlegierung oder ein Material (Verbindung), das bzw. die Lithiumionen interkalieren kann; und wobei die positive Elektrode mindestens ein aktives Elektrodenmaterial, einen leitfähigen Zusatzstoff und ein Bindemittel umfasst; **dadurch gekennzeichnet, dass** das aktive Elektrodenmaterial Oxide oder komplexe Oxide von Übergangsmetallen (vorzugsweise einschließlich mehrerer Metalle unterschiedlicher Valenz in der Zusammensetzung), Sulphide von Übergangsmetallen oder Mischungen von Übergangsmetallsulphiden umfasst, und wobei die positive Elektrode einen Redox-Shuttle-Zusatzstoff aufweist, um das Auflösen von dendritischem Lithium in dem Elektrolyt zu erleichtern, wobei es sich bei dem Redox-Shuttle-Zusatzstoff um mindestens einen der folgenden Stoffe handelt oder dieser mindestens einen der folgenden Stoffe umfasst: elementaren Schwefel oder anorganische, organische oder polymere Verbindungen aus Schwefel oder die Schwefel enthalten, die während der Entladung der Zelle Lithiumpolysulphide bilden, die sich in dem Elektrolyt auflösen.

2. Zelle oder Batterie nach Anspruch 1, wobei der Elektrolyt zusätzlich einen Redox-Shuttle-Zusatzstoff aufweist, bei dem es sich um den gleichen oder einen anderen Redox-Shuttle-Zusatzstoff als den Redox-Shuttle-Zusatzstoff in der Elektrode handeln kann.

3. Zelle oder Batterie nach einem der vorstehenden Ansprüche, wobei es sich bei dem Redox-Shuttle-Zusatzstoff um elementaren Schwefel handelt.

4. Zelle oder Batterie nach einem der vorstehenden Ansprüche, wobei es sich bei dem aktiven Elektrodenmaterial um FeS₂ handelt oder dieses überwiegend FeS₂ umfasst.

5. Zelle oder Batterie nach einem der vorstehenden Ansprüche, wobei es sich bei dem Bindemittel um ein Polymer handelt, das aus der Gruppe ausgewählt wird, die folgendes umfasst: Polyvinylacetat, Polyvinylalkohol, Polyvinylpyrrolidon, Polyethylenoxid, alkyliertes Polyethylenoxid, vernetztes Polyethylenoxid, Polyvinylether, Polyether gepfropfte Polysiloxane, Polymethylmethacrylat, Polyvinylidenfluorid, Copolymer aus Polyhexafluorpropylen und Polyvinylidenfluorid, Polyethylacrylat, Polytetrafluorethylen, Polyvinylchlorid, Polyacrylonitril (PAN), Polyvinylpyridin, Polystyrol und Derivate, Mischungen oder Copolymere dieser.

6. Zelle oder Batterie nach einem der vorstehenden Ansprüche, wobei als Separator poröse, mikroporöse oder fibröse dielektrische anorganische oder organische Stoffe oder Kombinationen dieser verwendet werden.

7. Zelle oder Batterie nach einem der vorstehenden Ansprüche, wobei der Elektrolyt eine Lösung aus einem oder mehreren Lithiumsalzen in einen aprotischen dipolaren Lösemittel oder einer Mischung aus aprotischen dipolaren Lösemitteln umfasst.

8. Zelle oder Batterie nach Anspruch 7, wobei die Elektrolytlösung mindestens ein Lösemittel oder mehrere Lösemittel umfasst, die aus der Gruppe ausgewählt werden, die folgendes umfasst: Tetrahydrofuran, 2-Methyltetrahydrofuran, Dimethylcarbonat, Diethylcarbonat, Ethylmethylcarbonat, Methylpropylcarbonat, Methylpropylpropyonat, Ehtylpropylpropyonat, Methylacetat, Ethylacetat, Propylacetat, Dimetoxyethan, 1,3-Dioxalan, Diglym (2-Methoxyethylether), Tetraglym, Ethylencarbonat, Propylencarbonat, γ-Butyrolacton, Sulfolan und Sulfone.

9. Zelle oder Batterie nach Anspruch 7 oder 8, wobei die Elektrolytlösung mindestens ein Salz oder mehrere Salze umfasst, die aus der Gruppe ausgewählt werden, die folgendes umfasst: Lithiumhexafluorphosphat (LiPF₆), Lithiumhexafluorarsenat (LiAsF₆), Lithiumperchlorat (LiCIO₄), Lithiumsulfonylimidtrifluormethan (LiN(CF₃SO₂)₂)) und Lithiumtrifluorsulfonat (CF₃SO₃Li) oder andere Lithiumsalze oder Salze eines anderen Alkalimetalls oder eine Mischung dieser, wie etwa Salze quartärer Ammoniumbasen, Natriumkaliumsalze, Halogenide, Lithiumbromide, Iodide und anderer.

10. Zelle oder Batterie nach einem der Ansprüche 7 bis 9, wobei eine Konzentration des Lithiumsalzes in einem Bereich von 0,1 M bis zu einer Konzentration von mindestens 90 % der Sättigungskonzentration des Salzes in dem verwendeten Lösemittel oder der verwendeten Lösemittelmischung liegt.

11. Zelle oder Batterie nach Anspruch 2 oder einem der Ansprüche 3 bis 10 in Abhängigkeit von Anspruch 2, wobei eine Konzentration des Redox-Shuttle-Zusatzstoffes in dem Elektrolyt 0,1 bis 0,5 M beträgt, berechnet auf der Basis der Schwefelatome.

12. Zelle oder Batterie nach einem der vorstehenden Ansprüche, wobei der Redox-Shuttle-Zusatzstoff in oxidierter Form in der positiven Elektrode bereitgestellt ist.

13. Zelle oder Batterie nach einem der vorstehenden Ansprüche, wobei die elektrochemische Kapazität des in der Elektrode enthaltenen Shuttle-Zusatzstoffes zwischen 5 und 25 % der elektrochemischen Kapazität des aktiven Materials der positiven Elektrode insgesamt liegt.

## Revendications

1. Cellule ou batterie rechargeable comprenant une électrode négative, un séparateur, une électrode positive et un électrolyte non aqueux, dans laquelle l'électrode négative comprend au moins un ou plusieurs lithium métallique, alliage de lithium ou matériau (composé) capable d'intercaler des ions lithium ; et dans laquelle l'électrode positive comprend au moins un matériau actif d'électrode, un additif conducteur et un liant ; **caractérisée en ce que** le matériau actif d'électrode comprend des oxydes ou des oxydes complexes de métaux de transition (de préférence comprenant plusieurs métaux de valence variable dans la composition), des sulfures de métaux de transition ou des mélanges de sulfures de métaux de transition, et dans laquelle l'électrode positive comprend un additif de navette rédox pour faciliter la dissolution de lithium dendritique dans l'électrolyte, l'additif de navette rédox étant ou comprenant au moins l'un de soufre élémentaire ou composés inorganiques, organiques ou polymères de ou contenant du soufre, qui pendant la décharge de la cellule, forment des polysulfures de lithium qui se dissolvent dans l'électrolyte.

2. Pile ou batterie selon la revendication 1, dans laquelle l'électrolyte comprend en outre un additif de navette rédox, qui peut être identique ou différent de l'additif de navette rédox dans l'électrode.

3. Pile ou batterie selon l'une quelconque des revendications précédentes, dans laquelle l'additif de navette rédox est du soufre élémentaire.

4. Pile ou batterie selon l'une quelconque des revendications précédentes, dans laquelle le matériau actif d'électrode est ou comprend principalement du FeS₂.

5. Pile ou batterie selon l'une quelconque des revendications précédentes, dans laquelle le liant est un polymère choisi dans le groupe comprenant : acétate de polyvinyle, alcool polyvinylique, polyvinylpyrrolidone, oxyde de polyéthylène, oxyde de polyéthylène alkylé, oxyde de polyéthylène réticulé, éther de polyvinyle, polysiloxanes greffés de polyéther, polyméthacrylate de méthyle, polyfluorure de vinylidène, copolymère de fluorure de vinylidène et de polyhexafluoropropylène, polyacrylate d'éthyle, polytétrafluoroéthylène, chlorure de polyvinyle, polyacrylonitrile (PAN), pyridine de polyvinyle, polystyrène, et leurs dérivés, mélanges ou copolymères.

6. Pile ou batterie selon l'une quelconque des revendications précédentes, dans laquelle des matériaux inorganiques ou organiques diélectriques poreux, microporeux ou fibreux ou des combinaisons de ceux-ci sont utilisés comme séparateur.

7. Pile ou batterie selon l'une quelconque des revendications précédentes, dans laquelle l'électrolyte comprend une solution d'un ou de plusieurs sels de lithium dans un solvant aprotique dipolaire ou un mélange de solvants aprotiques dipolaires.

8. Pile ou batterie selon la revendication 7, dans laquelle la solution électrolytique comprend au moins un ou plusieurs solvants choisis dans le groupe comprenant : tétrahydrofurane, 2-méthyltétrahydrofurane, carbonate de diméthyle, carbonate de diéthyle, éthylméthylcarbonate, méthylpropylcarbonate, méthylpropylpropyonate, éthylpropylpropyonate, acétate de méthyle, acétate d'éthyle, acétate de propyle, dimétoxyéthane, 1,3-dioxolane, diglyme (2-méthoxyéthyl éther), tétraglyme, carbonate d'éthylène, carbonate de propylène, y-butyrolactone, sulfolane et sulfones.

9. Pile ou batterie selon la revendication 7 ou 8, dans laquelle la solution électrolytique comprend au moins un ou plusieurs sels choisis dans le groupe comprenant : hexafluorophosphate de lithium (LiPF₆), hexafluoroarsénate de lithium (LiAsF₆), perchlorate de lithium (LiClO₄), lithium sulfonylimide trifluorométhane (LiN (CF₃SO₂)₂)) et lithium trifluorosulfonate (CF₃SO₃Li) ou autres sels de lithium ou sels d'un autre métal alcalin ou un mélange de ceux-ci tels que les sels de bases d'ammonium quaternaire, sels de potassium de sodium, halogénures, bromures de lithium, iodures et autres.

10. Pile ou batterie selon l'une quelconque des revendications 7 à 9, dans laquelle une concentration du sel de lithium est dans une plage allant de 0,1 M à une concentration d'au moins 90 % de la concentration de saturation du sel dans le solvant ou mélange de solvants utilisé.

11. Pile ou batterie selon la revendication 2 ou l'une quelconque des revendications 3 à 10 dépendant de la revendication 2, dans laquelle la concentration de l'additif de navette rédox dans l'électrolyte est 0,1-0,5 M calculée sur la base d'atomes de soufre.

12. Pile ou batterie selon l'une quelconque des revendications précédentes, dans laquelle l'additif de navette rédox est fourni sous forme oxydée dans l'électrode positive.

13. Pile ou batterie selon l'une quelconque des revendications précédentes, dans laquelle la capacité électrochimique de l'additif de navette contenu dans l'électrode est égale à 5-25 % de la capacité électrochimique de la matière active d'électrode positive dans son ensemble.
